Europäisches Patentamt

European Patent Office

Office européen des brevets

(19)

(11) Veröffentlichungsnummer: **0 288 458**
**B1**

(12) **EUROPÄISCHE PATENTSCHRIFT**

(45) Veröffentlichungstag der Patentschrift: **22.08.90**

(21) Anmeldenummer: **86905710.9**

(22) Anmeldetag: **15.10.86**

(86) Internationale Anmeldenummer:
**PCT/CH86/00144**

(87) Internationale Veröffentlichungsnummer:
**WO 88/02816 21.04.88 Gazette 88/09**

(51) Int. Cl.⁵: **F 02 N 15/02, F 16 D 41/06**

(54) **FREILAUFANTRIEB FÜR DEN ANLASSER EINES VERBRENNUNGSMOTORS.**

(43) Veröffentlichungstag der Anmeldung:
**02.11.88 Patentblatt 88/44**

(45) Bekanntmachung des Hinweises auf die
Patenterteilung:
**22.08.90 Patentblatt 90/34**

(84) Benannte Vertragsstaaten:
**AT BE CH DE FR GB IT LI LU NL SE**

(56) Entgegenhaltungen:
**DE-A-3 539 360
FR-A- 679 949
FR-A-1 154 767
FR-A-2 116 957
US-A-3 732 956
US-A-3 972 573**

(73) Patentinhaber: **EEA, EASTERN ENGINEERING
ASSOCIATES AG
Antonigasse 4
CH-5620 Bremgarten (CH)**

(72) Erfinder: **WERNER, André, G.
Fuchsenbergstrasse 21
CH-8645 Jona (CH)**

(74) Vertreter: **Scheidegger, Werner & Co.
Stampfenbachstrasse 48 Postfach
CH-8023 Zürich (CH)**

Courier Press, Leamington Spa, England.

# Beschreibung

Die Erfindung betrifft einen Freilaufantrieb für den Anlasser eines Verbrennungsmotors, mit koaxial zueinander angeordneten Ringkörpern und mit zwischen einer kreisförmigen Umfangsfläche des einen Ringkörpers und einer exzentrisch zur Achse verlaufende Kurvenbahnen aufweisenden Umfangsfläche des anderen Ringkörpers angeordneten Wälzkörpern, die durch jedem Wälzkörper zugeordnete Federn in die eine Relativverdrehung der Ringkörper nur in einer Richtung zulassende Klemmstellung gedrückt sind, sowie mit einem mit dem einen Ringkörper verbundenen Andrehritzel und mit einer mit dem anderen Ringkörper verbundenen Hülse zur Aufnahme einer Antriebswelle, wobei der innere Ringkörper an der Aussenumfangsfläche die exzentrisch zur Achse verlaufenden Kurvenbahnen aufweist und der äussere der koaxial zueinander angeordneten Ringkörpern eine kreisförmige Innenumfangsfläche aufweist.

Bekannte Freilaufantriebe dieser Art werden seit langem insbesondere zum Starten eines Kraftfahrzeuges als Teil des Anlassers verwendet, wobei die auf der Anlasserwelle sitzende Hülse mittels eines Einrückrelais axial bewegt wird, so dass das am von der Hülse abgewandten Ende des Freilaufantriebs befindliche Andrehritzel des Freilaufantriebs mit dem Anlasserzahnkranz des Verbrennungsmotors in Eingriff gelangt. Sobald der Verbrennungsmotor in Gang gesetzt ist, muss das noch in Zahneingriff befindliche Andrehritzel gegenüber der Anlasserwelle durchdrehen können, bis der Zahneingriff zwischen Andrehritzel und Zahnkranz des Motors aufgehoben ist, weshalb diese Verbindung zwischen Anlasserwelle und Zahnkranz des Motors als Freilauf gestaltet ist. Die für diesen Einsatz verwendeten Freiläufe weisen immer zwischen einer kreisförmigen Umfangsfläche eines Ringkörpers und einer exzentrisch zur Achse verlaufende Kurvenbahnen aufweisenden Umfangsfläche eines weiteren Ringkörpers angeordnete Wälzkörper auf, die sich in der einen Drehrichtung des einen oder anderen Ringskörpers verklemmen, so dass der eine den anderen Ringkörper mitnimmt, während in der entgegengesetzten Drehrichtung aufgrund der dann eintretenden Freilaufwirkung einer Relativverdrehung der Ringkörper möglich ist. Dabei kann die Drehrichtung je nach Auslegung des Anlassers links oder rechts gerichtet sein.

Die Wälzkörper bestehen bei einem Freilauf dieser Art aus Rollen, die durch je eine Feder in die Klemmstellung gedrückt werden. Die Federn müssen gehalten werden und die Vielzahl von Federn und Rollen müssen sich möglichst zweckmässig montieren lassen, weshalb ringförmige Träger mit Stützelementen für die Federn in sehr unterschiedlichen Ausgestaltungen entwickelt worden sind.

Die Umgangsfläche des einen der beiden zueinander konzentrischen Ringkörpers mit den exzentrisch zur Achse verlaufenden Kurvenbahnen hat man früher durch spanabhebende Bearbeitung hergestellt und den äusseren Ringkörper gewählt, dessen innere Umfangsfläche bearbeitet wurde, bis man dazu übergegangen ist, diesen Körper durch Pressen oder eine andere rationale Fertigung herzustellen. Dieser äussere Ringkörper ist bei den Freiläufen der vorbezeichneten Art über einen Flansch mit der Hülse einstückig verbunden, welche zur Aufnahme der Anlasserwelle dient. Das in dieser Weise einstückig ausgebildete Teil bildet ein Gehäuse zur Aufnahme des inneren Ringkörpers. Man stellt auch dieses Gehäuse mit der exzentrisch zur Achse verlaufende Kurvenbahnen aufweisenden inneren Umfangsfläche in der gleichen vorerwähnten Weise her. Ebenso wird der innere Ringkörper mit dem einstückig verbundenen Andrehritzel durch Kaltfliesspressen hergestellt. Abweichend von dieser Ausgestaltungsform könnte natürlich auch das Andrehritzel mit dem äusseren Ringkörper über einen Flansch verbunden sein und der innere Ringkörper mit der Hülse zur Aufnahme der Anlasserwelle verbunden sein.

Aus der FR-A-1 154 767 ist nun ein verbesserter Freilaufantrieb bekannt, bei welchem die Kurvenbahnen bereits auf der Umfangsfläche des inneren Ringkörpers angeordnet werden. Obwohl dies an sich eine Verbesserung darstellt, vermag diese Konstruktion die Anforderungen an Einfachheit der Gesamtkonstruktion, Zuverlässigkeit und einfachen Zusammenbau nicht zu befriedigen.

Die bekannten Freilaufantriebe der vorstehend beschriebenen Art versagen gelegentlich bei Ueberbeanspruchung, wobei dann die Wälzkörper auf der kreisförmigen Umfangsfläche des einen Ringkörpers der Verklemmung nicht mehr standhalten und somit der Antrieb ohne Wirkung ist, welcher Nachteil zur Folge hat, dass man ein mit diesem Freilaufantrieb ausgestattetes Kraftfahrzeug anschieben oder abschleppen muss, sofern nicht im Ausnahmefall ein Handkurbelbetrieb zum Anlassen des Motors vorgesehen ist. Als weiterer Nachteil tritt dann Verschleiss auf oder kommt es zu einem vollständigen Defekt.

Verbesserte Konstruktionen sind aus US-A-3,732,956 und US-A-3,972,573 bekannt. Die erstere zeigt jedoch eine ausserordentlich komplizierte, konstruktiv aufwendige Halterung für die Wälzkörper und Andrückfedern. Diese bekannte Konstruktion kann bereits bei geringfügigen Deformationen der genannten Halterung mit Funktionsstörungen behaftet sein. Zudem ist die Montage sehr aufwendig. Die zweite Publikation zeigt eine Konstruktion, bei welcher der Käfig (Halterung der Wälzkörper und Andrückfedern) zwar einfacher aufgebaut ist. Allerdings belassen die Aufnahmetaschen für die Wälzkörper wenig Bewegungsspielraum für letztere, was im Betrieb zu unerwünschten Störungen führen kann. Dies ist aber gerade bei Freilaufantrieben ein gewichtiger Störfaktor. Der enge Bewegungsspielraum würde die Anwendung bei Freilaufantrieben mit auf dem inneren Ringkörper angeordneten Kurvenbahnen praktisch verunmöglichen.

Die der vorliegenden Erfindung zugrunde liegende Aufgabe besteht daher darin, zur Vermeidung der vorgenannten Nachteile den Freilaufantrieb so zu verbessern, dass ein Versagen ausgeschlossen ist. Dabei wird auch das Ziel verfolgt, die Herstellung im Hinblick auf eine Reduktion der Gestehungskosten zu vereinfachen.

Zur Lösung dieser Aufgabe besitzt der Freilaufantrieb die Kombinationsmerkmale gemäss Anspruch 1. Es wurde in monatelangen Testserien festgestellt, dass der erfindungsgemässe Freilaufantrieb auch bei überhöhten Beanspruchungen immer funktionstüchtig bleibt und somit auch keinem durch Versagen verursachten Verschleiss unterworfen ist.

Weitere Vorteile und Einzelheiten der Erfindung ergeben sich aus der nachfolgenden Beschreibung und den Zeichnungen, in denen eine Ausführungsform des Erfindungsgegenstandes rein beispielsweise dargestellt ist. Es zeigen:

Fig. 1 einen Axialschnitt durch den Freilaufantrieb;

Fig. 2 einen Querschnitt nach der Linie II-II in Fig. 1;

Fig. 3 einen Ausschnitt aus Fig. 2 in grösserem Massstab;

Fig. 4 in schaubildlicher Darstellung den aus Andrehritzel, Flansch und innerer Ringkörper bestehenden Teil;

Fig. 5 die kreisringförmige Federführung in Draufsicht;

Fig. 6 eine Unteransicht der Federführung;

Fig. 7 eine schaubildliche Darstellung der Federführung;

Fig. 8 in grösserem Massstab einen Ausschnitt der Federführung mit Wälzkörper und Feder.

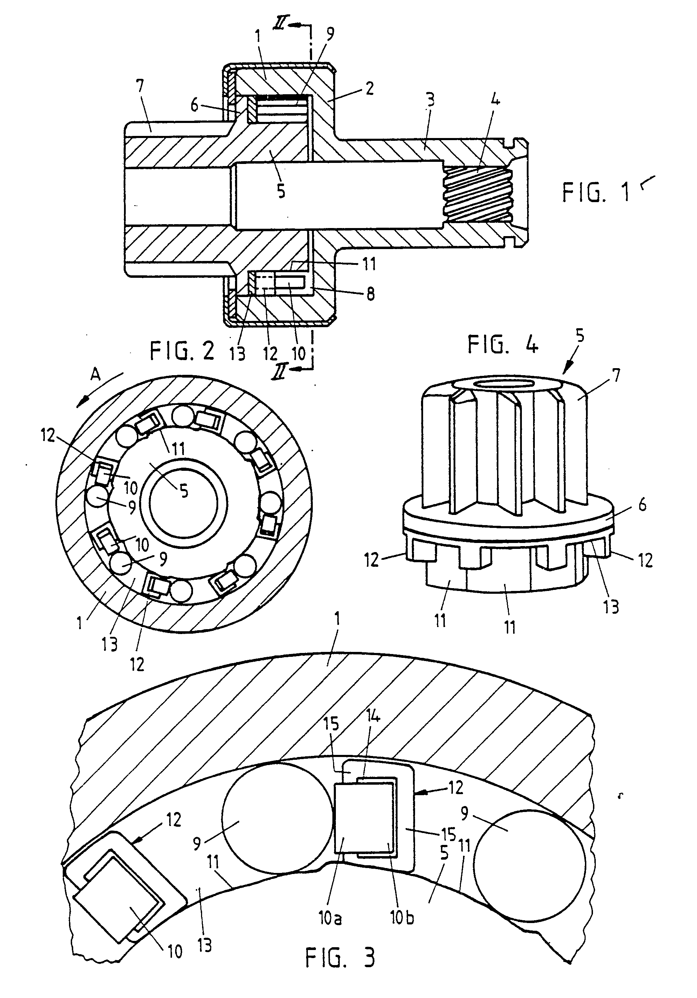

Der Freilaufantrieb gemäss Fig. 1 weist einen äusseren Ringkörper 1 auf, der über einen Flansch 2 einstückig mit einer Hülse 3 verbunden ist, die innen eine schraubenförmige Verzahnung 4 aufweist, so dass die Hülse auf einer eine Gegenverzahnung aufweisenden und nicht dargestellten Welle eines Anlassermotors eine axiale Bewegung ausführen kann. Der äussere Ringkörper 1, der Flansch 2 und die Hülse 3 sind einstückig hergestellt und bilden ein Gehäuse zur Aufnahme des inneren Ringkörpers 5, der koaxial zu dem äusseren Ringkörper 1 angeordnet ist. Dieser innere Ringkörper 5 ist über einen Flansch 6 einstückig mit dem Andrehritzel 7 verbunden. Dieses Andrehritzel 7 gelangt mit einem nicht dargestellten Zahnkranz eines Verbrennungsmotors in Eingriff, wenn beim Anlassen der ganze Freilaufantrieb in axialer Richtung verschoben wird. Der innere Ringkörper 5, der Flansch 6 und das Andrehritzel 7 sind einstückig hergestellt. Der Flansch 6 dient zur Zentrierung im äusseren Ringkörper 1 und schliesst gleichzeitig den Ringraum 8 zwischen dem äusseren Ringkörper 1 und dem inneren Ringkörper 5 nach aussen ab. In diesem Ringraum 8 befinden sich umfangsmässig in gleichen Winkelabständen verteilt angeordnet eine Anzahl als Rollen ausgebildete Wälzkörper 9 und eine gleiche Anzahl von Federn 10, die die Wälzkörper 9 in eine Stellung drücken, in welcher die Klemmwirkung zwecks Mitnahme des inneren Ringkörpers 5 wirksam ist, wenn der äussere Ringkörper 1 in der Pfeilrichtung A gemäss Fig. 2 angetrieben wird. Der innere Ringkörper 5 weist zu diesem Zweck an seiner Aussenumfangsfläche exzentrisch zur Achse verlaufende Kurvenbahnen 11 auf, auf welche jeweils ein Wälzkörper 10 aufrollt und in Klemmkontakt kommt, wenn der äussere Ringkörper 1 sich in der Antriebsdrehrichtung A dreht. Eine Relativverdrehung der beiden zueinander koaxialen Ringkörper 1 und 5 ist nur in einer Richtung möglich, und zwar kann der innere Ringkörper 5 den äusseren Ringkörper 1 in der gleichen Antriebsdrehrichtung A "überholen", was geschieht, wenn der Verbrennungsmotor angesprungen ist. In diesem Moment löst sich der Klemmkontakt und die Wälzkörper 10 rollen auf den Kurvenbahnen ab, wobei es sich nur um eine minimale Bewegung handelt. Der gleiche Freilaufeffekt würde umgekehrt auch eintreten, wenn der innere Ringkörper 5 festgehalten wird und der äussere Ringkörper 1 in der zum Pfeil A entgegengesetzten Richtung gedreht wird. Somit könnten die Funktionen der Teile des Freilaufantriebs auch vertauscht werden und das Andrehritzel mit dem äusseren Ringkörper und die Hülse mit dem inneren Ringkörper verbunden sein.

Die Anzahl der exzentrisch zur Achse verlaufenden Kurvenbahnen 11 entspricht der Anzahl der Wälzkörper 9 und der Anzahl der Federn 10 und diese Anzahl richtet sich natürlich nach der Grösse bzw. dem Durchmesser des Freilaufantriebs. Die Wirkung des Freilaufs ist umso besser, je mehr Wälzkörper vorhanden sind, wenn im Durchmesser gleich grosse Freilaufantriebe verglichen werden. Die unterzubringende Anzahl von Wälzkörpern hängt davon ab, wieviel Platz für die Federn benötigt wird. Die bei den bekannten Freilaufantrieben verwendeten Schraubendruckfedern benötigen relativ viel Platz und für die Anordnung dieser Federn in dem kreisförmigen Ringraum sind die unterschiedlichsten Haltevorrichtungen entwickelt worden, die ähnlich wie ein Käfig bei einem Wälzlager die Beweglichkeit der Federn gewährleisten und sie so festhalten, dass sie in der Mitte gegen die Wälzkörper drücken.

Bei dem erfindungsgemässen Freilaufantrieb werden U-förmig gebogene Blattfedern 10 verwendet, die in der Umfangsrichtung wenig Platz benötigen, so dass es möglich wurde, mehr Wälzkörper und zugeordnete Federn in dem Ringraum des erfindungsgemässen Freilaufantriebs unterzubringen, der im Durchmesser gleich gross ist wie bekannte Freilaufantriebe mit Schraubendruckfedern.

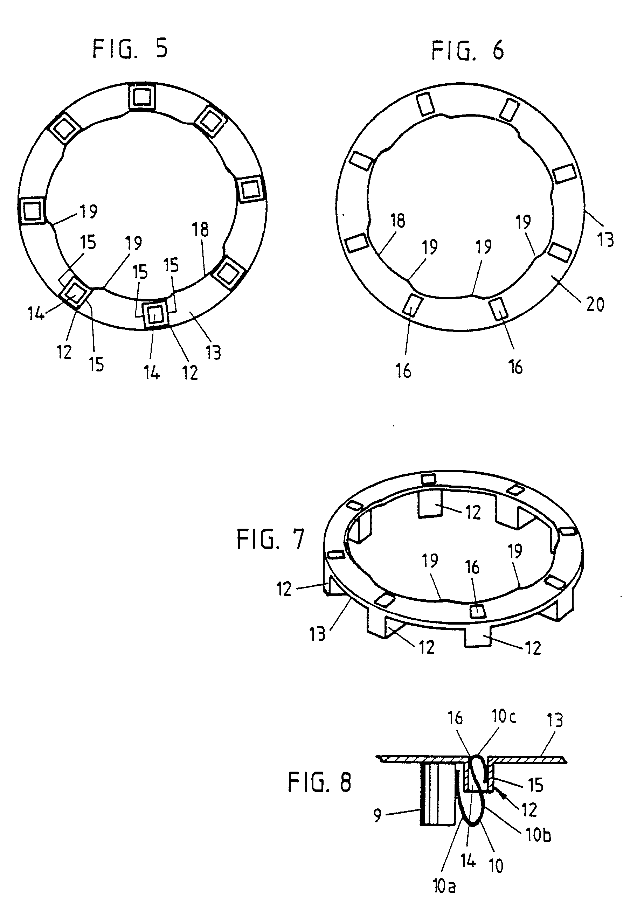

Wie aus den Darstellungen im grösserem Massstab gemäss Fig. 3 und 8 hervorgeht, weist jede U-förmig gebogene Blattfeder 10 einen gegen den Wälzkörper 9 angedrückten Schenkel 10a auf, während der andere Schenkel 10b in einer Federaufnahme 12 festgehalten ist, die an einer als flacher Ring ausgebildeten Federführung 13 axial vorstehend und mit dieser einstückig ausgebildet ist. Jede dieser in einer der Anzahl der Wälzkörper 9 entsprechenden Anzahl vorhandenen Federaufnahmen 12 besteht aus von der Ringfläche der Federführung 13 vorstehenden und einen rechteckförmigen Hohlraum 14 umschliessenden Wänden 15. Der am Ende zurückgebogene Schenkel 10b der Blattfeder 10 ist mit dem zurückgebogenen Teil 10c zwischen den einander gegenüberstehenden Wänden 15 der Federaufnahme 12 festgeklemmt gehalten. Der Hohlraum 14 zwischen den Wänden 15 der Federaufnahme 12 schliesst an eine gleich grosse rechteckförmige Ausnehmung 16 in der als Ring ausgebildeten Federführung 13 an, wobei sich der zurückgebogene Teil 10c der Blattfeder 10 bis in diese Ausnehmung 16 hinein erstreckt und somit an der Unterseite der Federführung 13 sichtbar ist. Diese innere Umfangskante 18 ist korrespondierend zu der mit exzentrisch zur Achse verlaufenden Kurvenbahnen 11 versehenen Umfangsfläche des inneren Ringkörpers 5 ausgebildet, d.h. die innere Umfangskante 18 ist korrespondierend mit den Kurvenbahnen 11 mit Vorsprüngen 19 versehen, wodurch die ringförmige Federführung 13 gegenüber dem inneren Ringkörper 5 drehfest gehalten ist. Sie liegt mit der den Federaufnahmen 12 gegenüber liegenden flachen und in Fig. 6 sichtbaren Seite 20 gegen den zwischen dem Andrehritzel 7 und dem inneren Ringkörper 5 vorhandenen Flansch 6 an.

Die Federn 10 können nicht nur in dem gegen die Wälzkörper anliegenden Schenkel 10a arbeiten, sondern dank des Spielraums in dem Hohlraum 14 der Federaufnahme 12 auch zusätzlich in dem Schenkel 10b arbeiten und die Federkraft kann bis zur Innenkante der Wände 15 der Federaufnahme 12 genutzt werden, was vom Federdruck und vom Durchmesser des Wälzkörpers abhängt.

Die Federführung 13 mit den Federaufnahmen 12 ist ein einstückiges Kunststoffteil. Durch die in die Federaufnahmen eingesetzten Federn 10 sind die Wälzkörper 9 im Bereich des Beginns des Anstiegs der Kurvenbahn 11 gegen den inneren Ringkörper 5 und gleichzeitig gegen die kreisförmige Innenumfangsfläche des äusseren Ringkörpers 1 angedrückt, so dass beim Drehen des angetriebenen äusseren Ringkörpers 1 ein sofortiger Klemmkontakt eintritt. Der innere Ringkörper 5 ist dabei am stärksten beansprucht.

**Patentansprüche**

1. Freilaufantrieb für den Anlasser eines Verbrennungsmotors, mit koaxial zueinander angeordneten Ringkörpern (1, 5) und mit zwischen einer kreisförmigen Umfangsfläche des einen Ringkörpers (1) und einer exzentrisch zur Achse verlaufende Kurvenbahnen (11) aufweisenden Umfangsfläche des anderen Ringkörpers (5) angeordneten Wälzkörpern (9), die durch jedem Wälzkörper (9) zugeordnete Federn (10) in die eine Relativverdrehung der Ringkörper (1, 5) nur in einer Richtung zulassende Klemmstellung gedrückt sind, sowie mit einem mit dem einen Ringkörper (5) verbundenen Andrehritzel (7) und mit einer mit dem anderen Ringkörper (1) verbundenen Hülse (3) zur Aufnahme einer Antriebswelle, wobei der innere Ringkörper (5) an der Aussenumfangsfläche die exzentrisch zur Achse verlaufenden Kurvenbahnen (11) aufweist und der äussere (1) der koaxial zueinander angeordneten Ringkörpern (1, 5) eine kreisförmige Innenumfangfläche aufweist, dadurch gekennzeichnet, dass der innere Ringkörper (5) mit dem Andrehritzel (7) mittels eines Flansches (6) einstückig verbunden ist, der den Ringraum (8) zwischen den zueinander koaxialen Ringkörpern (1, 5) an einem Ende abschliesst und zur Zentrierung des inneren im äusseren Ringkörper dient, dass die mit den Wälzkörpern (9) zusammenwirkenden Federn U-förmig gebogene Blattfedern (10) mit zwei Schenkeln (10a, 10b) sind, von denen jeweils ein Schenkel (10a) gegen einen Wälzkörper (9) angedrückt ist, und von denen der andere Schenkel (10b) in einer Federaufnahme (12) gehalten ist, die an einer als flacher Ring ausgebildeten Federführung (13) axial vorstehend ausgebildet ist und welche Federführung (13) eine der vorhandenen Anzahl von Wälzkörpern (9) entsprechende Anzahl von Federaufnahmen (12) umfangmässig in gleichen Winkelabständen verteilt angeordnet besitzt und gegenüber dem inneren Ringkörper (5) drehfest gehalten ist, dass die als flacher Ring ausgebildete Federführung (13) an der inneren Umfangskante (18) korrespondierend zu der mit exzentrisch zur Achse verlaufenden Kurvenbahnen (11) versehenen Umfangsfläche des inneren Ringkörpers (5) ausgebildet ist und dadurch gegenüber dem inneren Ringkörper (5) drehfest gehalten ist, und dass die Federführung (13) mit ihrer den Federaufnahmen (12) gegenüberliegenden flachen Seite (20) gegen den zwischen dem Andrehritzel (7) und dem inneren Ringkörper (5) vorhandenen Flansch (6) anliegt.

2. Freilaufantrieb nach Anspruch 1, dadurch gekennzeichnet, dass jede der Federaufnahmen (12) an der als flacher Ring ausgebildeten Federführung (13) aus von der Ringfläche vorstehenden und einen rechteckförmigen Hohlraum (14) umschliessenden Wänden (15) besteht, und zwischen gegenüberstehenden Wänden (15) der in den Hohlraum (14) sich hinein erstreckende und einen zurückgebogenen Teil (10c) aufweisende Schenkel (10b) der Feder (10) festgeklemmt gehalten ist.

**Revendications**

1. Entraînement en roue libre pour le démarreur d'un moteur à combustion interne, comprenant des éléments annulaires (1, 5) disposés coaxialement l'un par rapport à l'autre et des corps à roulement (9) disposés entre une surface périphérique circulaire de l'un des éléments annulaires (1) et une surface périphérique présentant des tracés courbes (11) excentriques par rapport à l'axe, de l'autre desdits éléments annulaires (5), chaque corps à roulement (9) étant pressé par un ressort (10) associé dans une position de serrage permettant une rotation relative des éléments annulaires (1, 5) dans une direction seulement, et comprenant un pignon de démarrage (7) attaché à l'un des éléments annulaires (5) et une douille (3) attachée à l'autre élément annulaire (1) et destiné à recevoir un arbre d'entraînement, ledit élément annulaire intérieur (5) possédant sur sa surface périphérique extérieure lesdits tracés combes (11) excentriques par rapport à l'axe et l'élément annulaire extérieur (1) de la paire d'éléments annulaires coaxiaux (1, 5) présentant une surface périphérique intérieure qui est circulaire, caractérisé en ce que ledit élément annulaire intérieur (5) forme partie intégrante avec le pignon de démarrage (7) par l'intermédiaire d'une flange (6) qui ferme l'espace annulaire (8) entre les éléments annulaires coaxiaux (1, 5) à une extrémité et sert a centrer l'élément annulaire intérieur dans l'élément annulaire extérieur; en ce que les ressorts qui coopèrent avec les corps à roulement (9) sont des ressorts à lame (10) en forme de U avec deux branches (10a, 10b) dont une branche (10a) s'appuie contre un corps à roulement (9) associé et l'autre branche (10b) est retenue dans un récepteur de ressorts (12) qui se présente sous un forme d'une partie en saillie d'un guide de ressorts plat annulaire (13), ce guide de ressorts (13) possédant des récepteurs de ressorts (12) en un nombre égal au nombre des corps à roulement (9) présents, lesdits récepteurs étant distribués à des distances angulaires égales autour de la périphérie et le guide de ressorts étant retenu contre toute rotation par rapport à l'élément annulaire intérieur (5); en ce que le guide de ressorts (13) est un anneau plat ayant un bord périphérique intérieur (18) correspondant à la surface périphérique de l'élément annulaire intérieur (5A) présentant les tracés courbes (11) excentriques par rapport à l'axe, le guide de ressorts étant ainsi retenu contre toute rotation par rapport à l'élément annulaire intérieur (5); et en ce que le guide de ressorts (13) avec sa face plate (20) qui se trouve en opposition aux récepteurs de ressorts (12) s'appuie contre le flange (6) se trouvant entre le pignon de démarrage (7) et l'élément annulaire intérieur (5).

2. Entraînement en roue libre selon la revendication 1, caractérisé en ce que chacun des récepteurs de ressorts (12) sur le guide de ressorts plat (13) comprend des parois (15) qui projettent de la surface annulaire et enferment un espace creux rectangulaire (14), et en ce que la branche (10b) du ressort (10) qui s'étend dans ledit espace creux (14) et qui présente une partie courbée vers l'arrière (10c) est retenue serrée entre des parois opposées (15).

## Claims

1. A free-running drive for the starter of an internal combustion engine, comprising ring members (1, 5) arranged coaxially to one another and roller bodies (9) disposed between a circular peripheral surface of one ring member (1) and a peripheral surface of the other ring member (5) having cam tracks (11) extending eccentrically of the axis, each said roller body (9) being biased by an associated spring (10) into a clamping position which permits relative rotation of the ring members (1, 5) in one direction only, and comprising a driving pinion (7) connected to one ring member (5) and a sleeve (3) connected to the other ring member (1) for reception of a drive shaft, whereby the inner ring member (5) possesses on its outer peripheral surface the cam tracks (11) which extend eccentrically of the axis and the outer one (1) of the two coaxially arranged ring members (1, 5) has an inner peripheral surface which is circular, characterized in that the inner ring member (5) is integrally united with the driving pinion (7) by means of a flange (6) which closes off the annular space (8) at one end between the mutually coaxial ring members (1, 5) and serves for centering the inner ring member in the outer one; in that the springs which cooperate with the roller bodies (9) are strap springs (10) bent into an U-shape with two limbs (10a, 10b), of which one limb (10a) bears against a respective roller body (9), and the other limb (10b) is held in a spring receptor (12) which is designed as an axial projection of a flat annular spring guide (13), which spring guide (13) possesses a number of spring receptors (12) equal to the number of roller bodies (9) present, said receptors being distributed at equal angles around the periphery, and which spring guide is secured against rotation with respect to the inner ring member (5); in that the spring guide (13) is a flat ring having an inner peripheral edge (18) corresponding to the peripheral surface of the inner ring member (5) with cam tracks (11) extending eccentrically of the axis, the spring guide being thereby secured against rotation with respect to the inner ring member (5); and in that the spring guide (13) with its flat side (20) which lies opposite the spring receptors (12) abuts the flange (6) present between the driving pinion (7) and the inner ring member (5).

2. A free-running drive according to claim 1, characterized in that each of the spring receptors (12) on the flat annular spring guide (13) consists of walls (15) which project from the annular surface and enclose a rectangular hollow space (14), and that that limb (10b) of the spring (10) which extends into the hollow space (14) and which has a backwardly bent part (10c) is held clamped securely between opposing walls (15).

EP 0 288 458 B1

FIG. 1

FIG. 2

FIG. 4

FIG. 3

1

FIG. 5

FIG. 6

FIG. 7

FIG. 8

2